# DEMANDE DE BREVET EUROPEEN

(11) **EP 4 748 784 A1**
(43) Date de publication de la demande: **27.05.2026**
(21) Numéro de dépôt: 25218300.9
(22) Date de dépôt: 25.11.2025
(51) Int. Cl.: C01B 3/047, H01M 8/0606, H01M 8/0662

(54) **SYSTÈME DE PILE À COMBUSTIBLE, VÉHICULE ET PROCÉDÉ DE DÉCONTAMINATION ASSOCIÉS**

(30) Priorité: 26.11.2024 FR 2413018
(71) Demandeur: AMPERE s.a.s., 92100 Boulougne-Billancourt (FR)
(72) Inventeur: ABD-EL-KADER, Ahmad, 78280 Guyancourt (FR); AKROUT, Alia, 78280 Guyancourt (FR); CAILLARD, Pierre, 78280 Guyancourt (FR); GERARD, David, 78280 Guyancourt (FR)
(74) Mandataire: Renault Group

(57) **Abrégé**

L'invention concerne un système de pile à combustible (1) comprenant :
- une pile à combustible (10) qui comporte un compartiment anodique et un compartiment cathodique, et
- un système d'alimentation (2) alimentant le compartiment anodique de la pile à combustible en dihydrogène (H2) et comprenant un premier réservoir (21) adapté à stocker de l'ammoniac (NH3), un étage de reformage (24) adapté à reformer l'ammoniac du premier réservoir en dihydrogène et à produire du diazote (N2), et un étage de purification (25) adapté à filtrer le diazote produit dans l'étage de reformage.

Selon l'invention, l'étage de purification communique avec un deuxième réservoir (41) adapté à stocker le diazote filtré par ledit étage de purification, le deuxième réservoir communique avec le compartiment cathodique de la pile à combustible, et il est prévu des moyens de régulation du débit (42, 43) de diazote circulant depuis le deuxième réservoir jusqu'au compartiment cathodique de la pile à combustible.

## Description

### DOMAINE TECHNIQUE DE L'INVENTION

La présente invention concerne de manière générale les piles à combustible.

Elle concerne plus particulièrement un système de pile à combustible.

L'invention trouve une application particulièrement avantageuse pour décontaminer une pile à combustible fonctionnant dans des environnements pollués.

Elle concerne également un véhicule comprenant un tel système de pile à combustible, ainsi qu'un procédé de décontamination associé.

### ETAT DE LA TECHNIQUE

Il est connu de générer un courant électrique à l'aide d'une pile à combustible dans laquelle se produit, sur une première électrode, une réaction d'oxydation d'un combustible (par exemple le dihydrogène), et, sur une seconde électrode, une réaction de réduction d'un oxydant.

En règle générale, une telle pile à combustible utilise comme oxydant le dioxygène contenu dans l'air.

Ces piles à combustible, notamment celles dites « à membrane échangeuse de protons (PEMFC) », sont alors très sensibles aux polluants contenus dans l'air. Elles sont plus particulièrement sensibles, entre autres, au dioxyde de soufre (SO2). Ce polluant s'accumule en effet sur la surface de l'une de ces électrodes, entravant alors le bon déroulement des réactions chimiques et réduisant ainsi l'efficacité globale de la pile à combustible.

Cette détérioration progressive des performances de la pile à combustible entraîne une augmentation des coûts de maintenance et une réduction de la durée de vie de la pile. Cette détérioration est d'autant plus rapide que la pile à combustible est utilisée dans des zones où l'air est pollué (notamment dans des zones urbaines).

Cette détérioration est toutefois réversible, pour autant que la concentration en polluants sur les électrodes ne soit pas trop élevée.

Le document US2003180586 propose ainsi d'insuffler de l'azote à la place de l'air dans la pile à combustible afin de la régénérer.

Cette régénération doit être mise en œuvre régulièrement pour éviter une détérioration irréversible de la pile à combustible, ce qui s'avère en pratique onéreux. Par ailleurs, cette régénération nécessite un approvisionnement en diazote, ce qui constitue une contrainte supplémentaire pour les ateliers d'entretien des véhicules et pour les utilisateurs.

### PRESENTATION DE L'INVENTION

Afin de remédier aux inconvénients précités de l'état de la technique, la présente invention propose de décontaminer les piles à combustibles, en venant y insuffler du diazote produit lors du reformage de l'hydrogène nécessaire au fonctionnement usuel de la pile, et qui aura été stocké à cette fin.

Plus particulièrement, on propose selon l'invention un système de pile à combustible comprenant une pile à combustible qui comporte un compartiment anodique et un compartiment cathodique, et un système d'alimentation alimentant le compartiment anodique de la pile à combustible en hydrogène (issu d'une réaction de reformage de l'ammoniac) et comprenant un premier réservoir adapté à stocker de l'ammoniac, un étage de reformage adapté à reformer l'ammoniac du premier réservoir en dihydrogène et à produire du diazote, et un étage de purification adapté à filtrer le diazote produit dans l'étage de reformage, dans lequel il est prévu que l'étage de purification communique avec un deuxième réservoir adapté à stocker le diazote filtré par l'étage de purification, que le deuxième réservoir communique avec le compartiment cathodique de la pile à combustible, et dans lequel il est aussi prévu des moyens de régulation du débit de diazote circulant depuis le deuxième réservoir jusqu'au compartiment cathodique de la pile à combustible.

Ainsi, grâce à l'invention, le diazote produit dans l'étage de reformage est avantageusement réutilisé en vue de décontaminer la pile à combustible des polluants pouvant s'y être accumulés. En particulier, le dioxyde de souffre (SO2) est éliminée de la surface des électrodes, prolongeant la durée de vie de la pile. La mise en œuvre de cette décontamination est facilitée grâce à un approvisionnement in-situ du diazote (N2), au lieu de le relarguer dans l'atmosphère en fin de cycle de reformage de l'ammoniac (NH3), comme il est d'usage.

Le stockage du diazote (N2) produit lors du reformage de l'ammoniac (NH3) en hydrogène (H2) permet sa revalorisation afin d'accroitre la durée de vie des piles à combustibles, sans nécessiter de maintenance particulière pour l'approvisionnement du diazote (N2).

Il devient même possible de regénérer la pile à combustible de façon automatique, hors de tout atelier de maintenance.

D'autres caractéristiques avantageuses et non limitatives du système de pile à combustible conforme à l'invention, prises individuellement ou selon toutes les combinaisons techniquement possibles, sont les suivantes :
- il est prévu un contrôleur de tension adapté à appliquer une tension entre le compartiment cathodique et le compartiment anodique de la pile à combustible,
- le système comprend en outre un capteur de pollution et une unité de contrôle centrale adaptée à piloter les moyens de régulation et le contrôleur de tension en fonction de la pollution mesurée par le capteur de pollution,
- le capteur de de pollution comprend un capteur de gaz adapté à mesurer une concentration atmosphérique en dioxyde de soufre (SO2),
- le capteur de pollution comprend un capteur adapté à mesurer une grandeur interne à la pile à combustible,
- l'étage de purification du diazote comprend un système de type membrane au palladium adapté à filtrer le diazote,
- l'étage de purification comprend une unité adaptée à convertir l'ammoniac en diazote,
- l'unité adaptée à convertir l'ammoniac en diazote comprend un dispositif d'adsorption par inversion de pression,
- l'unité adaptée à convertir l'ammoniac en diazote comprend un dispositif d'adsorption à température modulée.

L'invention propose également un véhicule automobile comprenant un système de pile à combustible tel que décrit précédemment.

Par ailleurs, il est également décrit, dans le cadre de l'invention un procédé de décontamination du système de pile à combustible décrit, le procédé comprenant les étapes suivantes :
- reformage de l'ammoniac stocké dans le premier réservoir en diazote et en dihydrogène par l'étage de reformage,
- purification du diazote issu de l'étage de reformage par l'étage de purification,
- stockage du diazote dans le second réservoir,
- décontamination de la pile à combustible par injection de diazote issu du second réservoir dans le comportement cathodique de la pile à combustible.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est représentation schématique d'un système de pile à combustible conforme à l'invention, comprenant un système d'alimentation en dihydrogène ;
[Fig. 2] est un organigramme illustrant des étapes d'un procédé mettant en œuvre le système de pile à combustible de la figure 1.

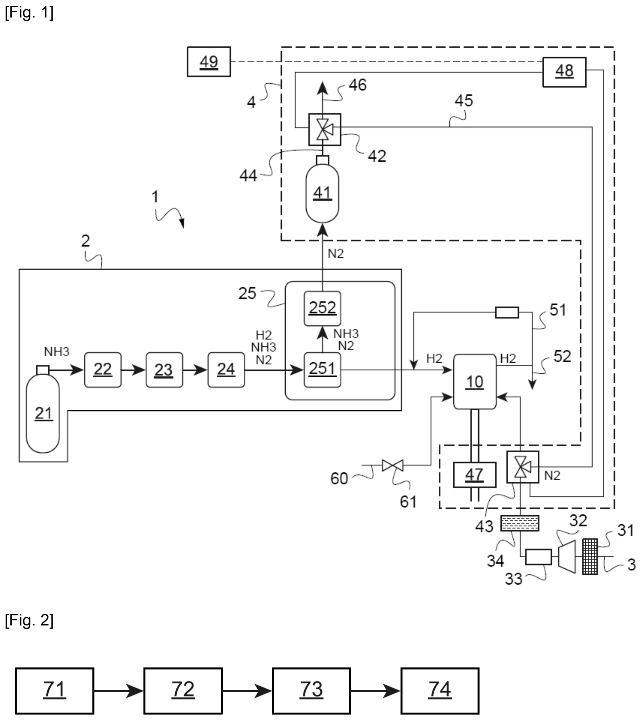

Sur la figure 1, on a représenté un système de pile à combustible 1, destiné à générer un courant électrique. Ce système de pile à combustible 1 peut être utilisé au sein de différents appareils, pour des applications diverses (stationnaires ou non).

Ici, il est embarqué dans un véhicule automobile, et plus précisément dans un véhicule terrestre tel que, par exemple, une voiture, une camionnette ou un camion.

Il est notamment prévu pour assurer l'alimentation en courant électrique d'un moteur électrique, directement ou indirectement (via une batterie d'accumulateurs).

Le système de pile à combustible 1 comprend une pile à combustible 10, adaptée à générer un courant électrique à partir d'une réaction d'oxydoréduction. Cette réaction implique un combustible et un oxydant. Le système de pile à combustible 1 comprend ainsi un système d'alimentation 2 pour fournir le combustible à la pile ainsi qu'une ligne d'entrée d'air 3 pour approvisionner la pile à combustible 10 en oxydant. Il est aussi prévu un système de décontamination 4, destinée à prolonger la durée de vie de la pile à combustible 10.

Ici, cette pile à combustible 10 est du type à membrane échangeuse de protons PEMFC. En particulier, la pile considérée transforme le dihydrogène H2 (le combustible) et le dioxygène O2 (l'oxydant) en une puissance électrique.

Pour cela, la pile à combustible 10 comporte :
- deux électrodes, à savoir une anode, placée dans un compartiment anodique et une cathode, placée dans un compartiment cathodique,
- deux plaques bipolaires, présentant chacune une entrée et une sortie entre lesquelles un fluide peut être mis en circulation. Les plaques comprennent une première plaque dans le compartiment anodique pour distribuer le combustible (typiquement du dihydrogène H2) vers l'anode, et une seconde plaque, située dans le compartiment cathodique, pour distribuer l'oxydant (par exemple du dioxygène O2) vers la cathode,
- une membrane échangeuse de protons faisant fonction d'électrolyte isolant (elle bloque le passage des électrons tout en laissant passer les ions H+, aussi appelés protons).

Lorsque le compartiment cathodique est alimenté par un flux du combustible (ici, le dihydrogène H2), il s'y produit une réaction d'oxydation. Une réaction de réduction se produit quant à elle au sein du compartiment anodique, par la réaction entre un flux de l'oxydant (ici le dioxygène O2) et les ions H+ issus de la réaction d'oxydation.

Enfin, la pile à combustible 10 comporte deux bornes électriques connectées aux deux électrodes.

L'oxygène (ou le dioxygène O2) alimentant le compartiment cathodique provient de l'air ambient, ce qui rend la pile à combustible 10 particulièrement susceptible au risque de contamination par des polluants aéroportés, tel que le dioxyde de soufre SO2. Celui-ci est particulièrement présent dans les zones urbaines, et vient s'accumuler au sein de la pile à combustible 10. Cette accumulation vient ensuite dégrader progressivement les performances de la pile à combustible 10.

Comme représenté sur la figure 1, la ligne d'entrée d'air 3 est prévue pour approvisionner le compartiment cathodique en air ambient.

Cette ligne d'entrée d'air 3 comprend successivement un filtre à air 31, prélevant et filtrant l'air de l'atmosphère, un compresseur d'air 32 comprimant l'air filtré, un refroidisseur d'air 33 qui refroidit l'air comprimé et un humidificateur d'air 34.

Le compartiment anodique est alimenté quant à lui par le système d'alimentation 2 en dihydrogène H2, qui est également représenté sur la figure 1.

A des fins d'optimisation, il est prévu une boucle de recirculation du dihydrogène H2 non-consommé en sortie du compartiment anodique. Ce dihydrogène H2 non-consommé est réintroduit à l'entrée du compartiment anodique, grâce à un conduit 51 dédié, ou bien évacué vers l'extérieur/l'atmosphère à l'aide d'une purge 52.

Pour des raisons de praticité et de sécurité, le dihydrogène H2 fourni au compartiment anodique est ici stocké par conversion en ammoniac NH3, c'est-à-dire sous la forme d'ammoniac NH3 et non de dihydrogène H2 pur. Ainsi, le système d'alimentation 2 comprend un premier réservoir 21 adapté au stockage de l'ammoniac NH3. Cet ammoniac NH3 est ensuite converti en dihydrogène H2 afin d'approvisionner le compartiment anodique.

En pratique, l'ammoniac NH3 est stocké sous forme liquide, à une pression de 10 bars environ et une température de 298.15 K. Le premier réservoir 21 est par exemple composé d'acier inoxydable. Il présente de manière avantageuse un taux d'évaporation (ou *boil-off rate* en anglais) inférieur à 0.04% par jour.

Le premier réservoir 21 est relié à une pompe 22, adaptée à pomper l'ammoniac NH3 dans sa forme liquide, afin de le faire circuler à travers une série d'échangeurs thermiques 23. Ces échangeurs thermiques 23 permettent de faire passer l'ammoniac NH3 d'un état liquide à un état gazeux.

L'ammoniac NH3, sous forme gazeuse passe ensuite dans un étage de reformage 24, aussi appelé étage de craquage. Cet étage de reformage 24 convertit l'ammoniac NH3 reçu en entrée en dihydrogène H2 et en diazote N2 à sa sortie. Ainsi, l'étage de reformage est adapté à reformer l'ammoniac en dihydrogène H2 et en diazote N2. Ici, la réaction suivante en mise à l'oeuvre dans l'étage de reformage 24 :
NH3 → 0.5 N2 + 1.5 H2, ΔH° = +46.19 kJ.mol⁻¹.

Cet étage de reformage 24 présente un rendement en dihydrogène H2 avec une fraction volumique de 75 % vol, et produit également du diazote N2 avec un rendement avec une fraction volumique de 25 % vol. Des traces d'ammoniac NH3 subsiste après l'étage de reformage 24, l'ammoniac NH3 représentant 250 à 500 parties par million en volume (ppmv) des produits après l'étage de reformage 24.

Cet étage de reformage 24 comprend un reformeur, alimenté en chaleur par une unité de chauffage, aussi appelée brûleur, non-représentée ici. Cette unité de chauffage est alimentée en ammoniac NH3 par le premier réservoir 21 et en dihydrogène H2 par le reformeur. Ces deux espèces sont brûlées afin de produire assez de chaleur pour la réaction de reformage de l'ammoniac NH3 en dihydrogène H2. Cette combustion conduit à la production d'oxydes d'azote NOx en sortie de l'unité de chauffage.

Le système d'alimentation 2 comprend en aval de l'étage de reformage 24, un étage de purification 25 adapté notamment à purifier l'hydrogène H2 produit dans l'étage de reformage 24 et à purifier le diazote N2 produit dans ce même étage de reformage 24. Pour cela, l'étage de purification 25 est adapté à séparer le diazote N2 produit dans l'étage de reformage 24 du dihydrogène H2, mais aussi à séparer le diazote N2 d'éventuels autre produits et/ou réactifs résiduels. En pratique, cet étage de purification 25 est prévu pour fournir au compartiment anodique le dihydrogène H2 le plus pur possible. En effet, l'injection d'un dihydrogène H2 pollué dans le compartiment anodique est délétère pour la longévité de la pile à combustible 10.

L'étage de purification 25 comprend des moyens pour purifier le dihydrogène H2, notamment en le séparant du diazote N2 produit en sortie de l'étage de reformage 24.

Par ailleurs, l'étage de purification 25 comprend également des moyens pour purifier, c'est-à-dire filtrer, le diazote N2. En particulier, ici, l'étage de purification 25 comprend des moyens pour filtrer et/ou éliminer les traces d'ammoniac NH3 subsistantes en sortie de l'étage de reformage 24.

Ainsi, l'étage de purification 25 permet d'obtenir d'une part de l'hydrogène H2 pour alimenter le compartiment anodique, d'autre part, du diazote N2, tout en éliminant d'autres produits indésirables et/ou réactifs résiduels, comme par exemple l'ammoniac NH3.

De manière avantageuse dans le premier mode de réalisation décrit, les moyens pour filtrer et/ou les traces d'ammoniac NH3 sont choisis de manière à pouvoir produire du diazote N2.

Ainsi, l'étage de purification 25 comprend, dans le sens normal de circulation des gaz, une unité 251 adaptée à filtrer l'ammoniac NH3 et le diazote N2, permettant ainsi de purifier le dihydrogène H2 issu de l'étage de reformage 24. Une première sortie de l'unité 251 adaptée à filtrer l'ammoniac NH3 et le diazote N2 est reliée au compartiment anodique, afin d'alimenter la pile à combustible 10 en dihydrogène H2 purifié. Cette première sortie de l'unité 251 est confondue avec une première sortie de l'étage de purification 25. Une deuxième sortie de l'unité 251 adaptée à filtrer l'ammoniac NH3 et le diazote N2 est reliée à une unité 252 adaptée à convertir l'ammoniac NH3 en diazote N2. Cette unité 252 permet de purifier le diazote N2, en éliminant l'ammoniac NH3 résiduel. L'ammoniac NH3 et le diazote N2 filtrés par l'unité 251 sont dirigés vers cette deuxième sortie de l'unité 251.

De manière avantageuse, au niveau de la première sortie de l'étage de purification 25, la fraction volumique du diazote N2 est inférieure à 1 ppmv. De même, au niveau de la première sortie de de l'étage de purification 25, la fraction volumique de l'ammoniac NH3 est inférieure à 100 ppbv.

L'unité 251 adaptée à filtrer l'ammoniac NH3 et le diazote N2 purifie le dihydrogène H2 issu de l'étage de reformage 24 à une qualité adaptée à une injection dans la pile à combustible 10. Pour cela, l'unité 251 sépare, c'est-à-dire filtre, le diazote N2 et l'ammoniac NH3 du dihydrogène H2. En particulier, l'unité 251 comprend par exemple un système de filtration qui sépare le dihydrogène H2 de l'ammoniac NH3 et du diazote N2. Un tel système comprend une membrane séparatrice, par exemple une membrane séparatrice au palladium Pd.

Cette unité 251 permet de retirer l'ammoniac NH3 et le diazote N2 du mélange de gaz mis en entrée de l'étage de purification 25. Ce mélange de gaz correspond au mélange de gaz en sortie de l'étage de reformage 24, et comprend ainsi un mélange de dihydrogène H2, de diazote N2 et de traces d'ammoniac NH3.

Suivant le sens de circulation des gaz, le mélange de gaz issu de la deuxième sortie de l'unité 251 adaptée à filtrer l'ammoniac NH3 et le diazote N2 est injecté dans l'unité 252 adaptée à convertir l'ammoniac NH3 en diazote N2.

Cette unité 252 adaptée à convertir l'ammoniac NH3 en diazote N2 utilise l'ammoniac NH3 issu de la deuxième sortie de l'unité 251 afin de convertir les oxydes d'azote NOx issus de l'unité de chauffage. Un raccordement, non-représenté ici permet l'acheminement des oxydes d'azote NOx produits par l'unité de chauffage jusqu'à l'entrée de l'unité 252. Cette conversion des oxydes d'azote NOx par l'ammoniac NH3 produit avantageusement du diazote N2.

En sortie de l'unité 252, une fraction volumique du diazote N2 est issue de l'étage de reformage, tandis qu'une autre fraction volumique du diazote est issue de la conversion des oxydes d'azote NOx.

Une fraction non utilisée de l'ammoniac NH3 est captée par une colonne de sorption, comprise dans l'unité 252. Cette colonne de sorption purifie ainsi le diazote N2, en adsorbant l'ammoniac NH3, et évite que celui-ci soit relargué dans l'atmosphère. Par exemple, il peut s'agir d'une colonne de sorption utilisant un sorbant à base de charbon actif imprégné d'acide phosphorique.

Une sortie de l'unité 252 permet de fournir le diazote N2 purifié à un deuxième réservoir 41 auquel elle est fluidiquement liée. Cette sortie de l'unité 252 est confondue avec une deuxième sortie de l'étage de purification 25 Ainsi, le diazote N2 produit dans l'étage de reformage 24 et séparé du dihydrogène H2 par l'unité 251 et le diazote N2 obtenu par la réaction des oxydes d'azote NOx et de l'ammoniac NH3 dans l'unité 252 est stocké au sein du deuxième réservoir 41.

Aussi, le deuxième réservoir 41 est adapté à stocker le diazote N2, par exemple sous forme gazeuse. Alternativement, le diazote N2 peut être stocké sous forme liquide.

Ce deuxième réservoir 41, comme représenté sur la figure 1, est compris dans le système de décontamination 4 précité. Ce système de décontamination 4 comprend notamment des moyens de régulation du débit 42, 43, adaptés à contrôler un débit du flux de gaz entre une sortie du deuxième réservoir 41 et le compartiment cathodique.

Ce système de décontamination 4 permet notamment de régénérer les performances de la pile à combustible 10, lorsque celle-ci est contaminée par des polluants atmosphériques, en particulier, le dioxyde de souffre SO2. Ici, il est proposé de regénérer la pile à combustible 10 en insufflant un débit contrôlé de diazote N2 au sein du compartiment cathodique. Une telle décontamination de la pile par injection d'azote est par exemple décrite par le document US2003180586.

Néanmoins, dans le système de pile à combustible 1 conforme à l'invention, le diazote N2 est fourni par le deuxième réservoir 41

Le débit de diazote N2 insufflé est contrôlé par les moyens de régulation du débit 42, 43 de manière variablement continument, ou de manière bistable (ouvert/fermé). Ici, ces moyens comprennent par exemple deux vannes trois voies 42, 43.

Une première vanne trois voies 42 présente une entrée reliée à sortie 44 du deuxième réservoir 41, et deux sorties, une première sortie correspondant à une purge 46 et une deuxième sortie correspondant à l'entrée d'un conduit 45 relié au compartiment cathodique. Grâce à la première vanne trois voies 42, le diazote N2 du deuxième réservoir 41 est soit éjecté vers l'extérieur par la purge 46, ou bien vers le conduit 45 connectée à l'entrée du compartiment cathodique.

La purge 46 permet par exemple de vider le deuxième réservoir 41 lorsqu'il est trop plein pour pouvoir stocker une quantité de diazote supplémentaire issue du système d'alimentation 2.

Une deuxième vanne trois voies 43 est connectée sur la ligne d'entrée d'air 3 précédemment décrite. En particulier, la deuxième vanne trois voies 43 présente une sortie et deux entrées. La sortie est connectée à l'entrée du compartiment cathodique. Concernant les deux entrées, une première entrée permet l'approvisionnement de l'entrée du compartiment cathodique en air humidifié, dans le cadre du fonctionnement normal de la pile à combustible 10, tandis que la deuxième entrée permet d'insuffler du diazote N2 à l'entrée du compartiment cathodique, afin de procéder à une décontamination de la pile à combustible 10.

En particulier, la deuxième vanne trois voies permet aussi d'opérer un mélange entre le flux d'air humidifié provenant de la ligne d'entrée d'air 3 et le diazote N2 issu du deuxième réservoir 41.

La première vanne trois voies 42 et la deuxième vanne trois voies 43 sont toutes les deux commandées par une unité de contrôle centrale 48. Cette unité de contrôle centrale 48 détermine et applique un débit de diazote N2 à apporter au compartiment cathodique.

Le système de décontamination 4 comprend également un contrôleur de tension 47, prenant ici la forme d'un convertisseur DC-DC. Ce convertisseur DC-DC est branché entre les bornes de la pile à combustible 10 et est adapté à appliquer une tension entre le compartiment anodique et le compartiment cathodique. Plus spécifiquement, le convertisseur DC-DC est piloté, par exemple par l'unité de contrôle centrale 48, afin d'appliquer des cyclages en tension entre les bornes de la pile à combustible 10, dans le cadre d'un procédé de décontamination (aussi appelé procédé de régénération). Ce procédé implique d'injecter du diazote N2 issu du deuxième réservoir 41 au compartiment cathodique et d'appliquer des cycles en tension selon des schémas prédéfinis. Cela permet d'oxyder les espèces de souffre (par exemple le dioxyde de souffre) accumulés sur la pile à combustible 10.

A l'issu du procédé de décontamination, le souffre est évacué par une ligne d'évacuation de fluide 60. Cette ligne d'évacuation de fluide communique avec la sortie du compartiment anodique et comprend un silencieux d'échappement 61. La ligne d'évacuation de fluide 60 sert notamment de voie d'évacuation pour évacuer l'eau produit durant le fonctionnement normal de la pile à combustible 10.

Dans le premier mode de réalisation ici décrit, le système de décontamination 4 comprend un capteur de pollution 49. Ce capteur de pollution 49 est fonctionnellement relié à l'unité de contrôle centrale, afin de déterminer si le procédé de décontamination doit être mis en œuvre.

Dans un autre mode de réalisation, le procédé de décontamination est appliqué à la pile à combustible 10 à intervalle de temps régulier par le système de décontamination 4, lorsque le véhicule automobile est à l'arrêt. Dans ce cadre, aucun capteur de pollution 49 n'est nécessaire.

Ici, le capteur de pollution 49 permet de mettre en œuvre le système de décontamination 4 uniquement lorsque cela est nécessaire. Dit autrement, l'unité de contrôle centrale pilote les moyens de régulation du débit 42, 43 et le contrôleur de tension 47 en fonction de la pollution mesurée par le capteur de pollution 49. Afin de ne pas interférer avec le fonctionnement usuel de la pile à combustion, le système de décontamination 4 est mis à l'œuvre lorsque le véhicule est à l'arrêt.

Par exemple, le capteur de pollution comprend un capteur de gaz adapté à mesurer une concentration atmosphérique en polluants, ici en dioxyde de souffre SO2. De manière avantageuse, le capteur de gaz est placé à l'extérieur d'une enceinte du véhicule automobile, afin de mesurer des concentrations en polluants dans l'air ambiant. Ici, il est considéré que le système de décontamination 4 est mis en marche lorsque qu'une concentration en dioxyde de souffre SO2 dépasse une concentration seuil. Par exemple, la concentration seuil vaut ici 50 ppb.

Dans une variante possible, le capteur de pollution comprend un capteur adapté à mesurer une grandeur interne à la pile à combustible 10. Par exemple, par grandeur interne à la pile à combustible 10, il peut être entendu une mesure de résistance, et/ou une mesure d'un paramètre ECSA (pour « surface électrochimiquement active »), et/ou une mesure d'une courbe de polarisation. Un critère adapté est alors défini en fonction de la grandeur interne mesurée, afin de mettre en œuvre la stratégie de décontamination de la pile lorsqu'elle est jugée nécessaire.

Le système de pile à combustible 1 ainsi décrit permet de mettre en œuvre un procédé (ou stratégie) de décontamination, dont certaines des étapes ont déjà été détaillées précédemment. Plutôt que de relarguer le diazote dans l'atmosphère, le procédé proposé permet d'utiliser de manière avantageuse le diazote N2 produit lors de la réaction de reformage de l'ammoniac NH3. Le procédé, illustré sur la figure 2, comprend les étapes suivantes :
- une étape de reformage 71 de l'ammoniac NH3 stocké dans le premier réservoir 21 en diazote N2 et en dihydrogène H2, par l'étage de reformage 24,
- une étape de purification 72 du diazote N2 issu de l'étage de reformage 24 par l'étage de purification 25, afin d'isoler le diazote N2,
- une étape de stockage 73 du diazote N2 dans le second réservoir, au sein duquel le diazote N2 est stocké en vue de son utilisation,
- une étape de décontamination 74 de la pile à combustible 10 par injection de diazote N2 issu du second réservoir dans le compartiment cathodique de la pile à combustible 10.

En particulier, comme détaillé précédemment, cette étape de décontamination 64 peut éventuellement être pilotée par l'unité de contrôle centrale. Celle-ci est chargé de piloter et de réguler le débit de diazote N2 à approvisionner au compartiment cathodique, en fonction d'une information fournie par le capteur de pollution 49.

La présente invention n'est nullement limitée au mode de réalisation décrit et représenté, mais l'homme du métier saura y apporter toute variante conforme à l'invention.

Par exemple, dans un mode de réalisation possible, l'étage de purification peut comporter des composants différents, adaptés à fournir d'une part un dihydrogène H2 suffisamment pur au compartiment anodique et d'autre part du diazote à un deuxième réservoir prévu dans le système de décontamination. Par exemple, l'étage de purification peut comprendre, dans l'ordre de circulation des gaz, une unité adaptée spécifiquement au filtrage du diazote N2, suivie d'une unité adaptée au filtrage de l'ammoniac NH3, par exemple par un système par adsorption, les unités étant disposés en série, afin d'obtenir en sortie du dihydrogène purifié. Le deuxième réservoir serait quant à lui relié une sortie de l'unité adaptée au filtrage du diazote.

## Revendications

1. Système de pile à combustible (1) comprenant :
- une pile à combustible (10) qui comporte un compartiment anodique et un compartiment cathodique, et
- un système d'alimentation (2) alimentant le compartiment anodique de ladite pile à combustible (10) en dihydrogène (H2) et comprenant un premier réservoir (21) adapté à stocker de l'ammoniac (NH3), un étage de reformage (24) adapté à reformer l'ammoniac (NH3) du premier réservoir (21) en dihydrogène (H2) et à produire du diazote (N2), et un étage de purification (25) adapté à filtrer le diazote (N2) produit dans l'étage de reformage (24),
**caractérisé en ce que** l'étage de purification (25) communique avec un deuxième réservoir (41) adapté à stocker le diazote (N2) filtré par ledit étage de purification (25), **en ce que** ledit deuxième réservoir (41) communique avec le compartiment cathodique de la pile à combustible (10), et
**en ce qu'**il est prévu des moyens de régulation du débit (42, 43) de diazote (N2) circulant depuis ledit deuxième réservoir (41) jusqu'au compartiment cathodique de la pile à combustible (10).

2. Système de pile à combustible (1) selon la revendication 1, dans lequel il est prévu un contrôleur de tension (47) adapté à appliquer une tension entre le compartiment cathodique et le compartiment anodique de la pile à combustible (10).

3. Système de pile à combustible (1) selon la revendication 2, dans lequel il est prévu un capteur de pollution (49) et une unité de contrôle centrale (48) adaptée à piloter les moyens de régulation du débit (42, 43) et le contrôleur de tension (47) en fonction de la pollution mesurée par ledit capteur de pollution (49).

4. Système de pile à combustible (1) selon la revendication 3, dans lequel ledit capteur de pollution (49) comprend un capteur de gaz adapté à mesurer une concentration atmosphérique en dioxyde de soufre (SO2).

5. Système de pile à combustible (1) selon la revendication 3 ou 4, dans lequel ledit capteur de pollution (49) comprend un capteur adapté à mesurer une grandeur interne à la pile à combustible (10).

6. Système de pile à combustible (1) selon l'une quelconque des revendications 1 à 5, dans lequel l'étage de purification (25) comprend un système de type membrane au palladium adapté à filtrer le diazote (N2).

7. Système de pile à combustible (1) selon l'une quelconque des revendications 1 à 6, dans lequel ledit étage de purification (25) comprend une unité (252) adaptée à convertir l'ammoniac (NH3) en diazote (N2).

8. Système de pile à combustible (1) selon la revendication 7, dans lequel l'unité (252) adaptée à convertir l'ammoniac (NH3) en diazote (N2) comprend un dispositif d'adsorption par inversion de pression.

9. Système de pile à combustible (1) selon l'une quelconque des revendications 7 ou 8, dans lequel l'unité (252) adaptée à convertir l'ammoniac (NH3) en diazote (N2) comprend un dispositif d'adsorption à température modulée.

10. Véhicule automobile comprenant un système de pile à combustible (1) selon l'une quelconque des revendication 1 à 9.

11. Procédé de décontamination d'un système de pile à combustible (1) conforme à l'une quelconque des revendications 1 à 9, ledit procédé comprenant les étapes suivantes :
- reformage (71) de l'ammoniac (NH3) stocké dans le premier réservoir (21) en diazote (N2) et en dihydrogène (H2) par l'étage de reformage (24),
- purification du diazote (N2) issu de l'étage de reformage (24) par l'étage de purification (25),
- stockage (73) du diazote (N2) dans le deuxième réservoir (41),
- décontamination (74) de la pile à combustible (10) par injection de diazote (N2) issu du deuxième réservoir (41) dans le compartiment cathodique de la pile à combustible (10).
